# EUROPEAN PATENT SPECIFICATION

(11) **EP 2 485 604 B1**
(45) Date of publication and mention of the grant of the patent: **15.06.2016**
(21) Application number: 10771057.6
(22) Date of filing: 07.10.2010
(51) Int. Cl.: A23L 27/10, A23L 27/16, A23L 27/23

(54) **VEGETABLE FLAVOUR**
GEMÜSEAROMA
ARÔME VÉGÉTAL

(30) Priority: 08.10.2009 EP 09172552; 04.12.2009 EP 09178006
(43) Date of publication of application: 15.08.2012
(73) Proprietor: DSM IP Assets B.V., 6411 TE Heerlen (NL)
(72) Inventor: KORTES, Jan, Gerrit, 3833 HV Leusden (NL)
(74) Representative: Kuster, Janaart Frans
(86) International application number: PCT/EP2010/065006
(87) International publication number: WO 2011/042499

(56) References cited:
- EP-A1- 0 191 513
- WO-A1-01/30179
- WO-A1-02/49459
- WO-A1-2005/013723
- DE-A1- 4 440 259
- GB-A- 1 303 807
- US-A- 4 343 823
- US-A- 4 741 914
- US-A- 5 320 862

## Description

### Field of the invention

This invention relates to a vegetable flavour, a method for producing the same, and its use in food.

### Background of the invention

Natural vegetable flavours are widely used in the food industry to provide a vegetable flavour to the food products. The amount of vegetable flavour to be added to food depends on the application. For example, in dry applications such as snacks, pizzas, or potato crisps, the amount of vegetable flavour added to food is generally higher than in liquid applications such as soups and bouillons. A vegetable flavour may be a vegetable itself or a processed vegetable. Processing includes drying, for example to provide stability to the flavour, or chopping, or a combination of both. A common method to produce natural vegetable flavours includes chopping or shredding a vegetable, for example an onion or a garlic, and drying the chopped or shredded vegetable. Drying must be done at relative low temperatures, typically less than 50°C, since higher drying temperatures often result in the formation of burnt off-notes. In developing countries the drying is often done in the sun. In more sophisticated processes, however, drying is often done in an oven, in a belt-dryer, or on a roller-drum. When vegetables are dried under vacuum, their flavour becomes more concentrated and roasty. However, drying under vacuum requires to firstly prepare a vegetable liquid or paste, which is then dried in the vacuum over. As a result, this process is time-consuming. Moreover, the strength, or concentration of the abovementioned vegetable flavours is such that in order to obtain a food with a desired vegetable flavour they must be added to the food in relative high amounts, which is not economical and which may influence the original taste and texture of the food.

US5320862 discloses a method for preparing a flavoured oil, comprising contacting a garlic or an onion flavouring agent in particulate form (crushed or chopped garlic or onion) with a vegetable or nut oil at a temperature between 100°C and 150°C for a time period of between 15-90 minutes. US474194 discloses a flavour enhancing seasoning, containing a freeze-dried garlic powder, a nucleic acid type taste intensifying component such as IMP or GMP and yeast extract.

DE4440259 discloses a method of preparing a garlic flavour preparation, wherein freeze-dried garlic powder is mixed with vegetable fat, flavourants and other additives, pressed and granulated.

EP0191513 discloses a soup composition containing yeast extract, dried chopped onion powder and dried chopped carrots.

WO2005/013723 teaches the use of yeast extract as taste improver.

It is an object of the invention to provide a vegetable flavour which is more concentrated. It is another object of the invention to provide a process to produce a concentrated vegetable flavour which is simple and robust.

### Description of the invention

A concentrated vegetable flavour is disclosed, wherein the concentration of the vegetable flavour is such that in order to obtain a food with a desired vegetable flavour the concentrated flavour is added to said food in an amount to arrive at a final concentration of less than 0.1 % w/w of the food.

In the context of the invention "concentrated" refers to the strength of the vegetable flavour. The more concentrated a vegetable flavour is, that is, the stronger a vegetable flavour, the less of said vegetable flavour has to be added to food in order to obtain a food with the desired vegetable flavour. Adding less of the concentrated vegetable flavour of the invention may be advantageous since it may result in a food, after adding the concentrated vegetable flavour of the invention, with a more pleasant visual appearance and/or a better mouthfeel and/or a more authentic flavour.

The concentrated vegetable flavour of the invention is preferably suitable to enhance or impart a desired vegetable flavour to food, for example to impart a vegetable flavour which a food is lacking, before adding said concentrated vegetable flavour or to enhance an existing vegetable flavour of a food. The concentrated vegetable flavour of the invention is highly concentrated, i.e. the food or feed flavour is very strong, such that adding small amounts of the concentrated vegetable flavour of the invention to food may already be sufficient to provide the desired vegetable flavour. Because the concentrated vegetable flavour of the invention is so strong, it is preferably not suitable for consumption undiluted. In a preferred embodiment, the concentration of the concentrated vegetable flavour of the invention is such that in order to obtain a food with a desired vegetable flavour, the concentrated flavour of the invention is added to said food in an amount to arrive at a final concentration of less than 0.05% w/w, 0.04% w/w, even more preferably less than 0.03%, 0.02% w/w, most preferably less than 0.015% w/w, based on the total weight of the food and the concentrated vegetable flavour. The concentration of the flavour of the concentrated vegetable flavour of the invention may easily be established by the skilled person, for example by a cook or housewife, or a panel consisting of the same, or a panel of trained persons.

The vegetable flavour may be any vegetable flavour. Examples of vegetable flavours are the flavours of onion, garlic, leek, carrot, Brassica, ginger, and baslin. Preferably the concentrated vegetable flavour is a garlic flavour or an onion flavour. The concentrated vegetable flavour is preferably a roast concentrated vegetable flavour.

The concentrated vegetable flavour of the invention may be used for flavouring liquid food products like soups, bouillons, and sauces, or for flavouring non-liquid foods such as meat, pasta, vegetables, potato crips or chips, snacks, meat replacers such as tofu, fermented soy products, oriental food and seasonings for the same. The concentrated vegetable flavour of the invention is already effective in diluted concentrations and may therefore be used in a cost-effective manner in the application. The concentrated vegetable flavour of the invention may be Kosher and/or Halal and may be suitable for consumption by vegetarians and vegans. The concentrated vegetable flavour of the invention may be labeled as natural. The concentrated vegetable flavour of the invention may be added to food which is ready for consumption, or to food in preparation such as for example a frozen foodstuff such as a pizza, or a dough or a batter. The concentrated vegetable of the invention may be added to food and feed to enhance the vegetable flavour of a food or feed having itself already a vegetable flavour.

The invention provides a process to produce a concentrated vegetable flavour comprising
a) preparing a composition comprising a vegetable, an oil and a yeast extract and/or yeast autolysate,
   a) b)
b) intimately mixing the composition in an extruder at a temperature between 100°C and 160°C and a reaction time between 1 second and 1 week, sufficient for the concentrated vegetable flavour to develop, wherein the water content of the composition before or during step b) is between 1% and 8% w/w based on the total weight of the composition.

In the context of the invention the "intimately mixing" may include any form of mixing. It includes stirring, kneading and pressing. The intimate mixing is preferably done at a pressure above atmospheric pressure.

In an embodiment, the vegetable is a chopped vegetable. Within the context of the invention "chopping" includes any physical method causing the vegetable to break apart in a plurality of particles which are smaller than the vegetable itself. Chopped vegetables are understood to include milled, extruded, ground, shredded, rolled, cut, and mashed vegetables. The chopped vegetable particles thus formed may be in the form of a powder, granules, flakes, or pellets. Chopped vegetables have a higher surface / content ratio than the intact vegetable. It is believed that a high surface/content ratio of the vegetable may be important in the process of the invention since it allows for intimate mixing in step b). Therefore, the vegetable is preferably in the form of a powder. Even more preferably the vegetable powder is a vegetable juice powder. A juice power is obtained by extracting the liquid from a vegetable, for example by pressing, and drying said liquid fraction to obtain a powder. A vegetable juice powder is different from a vegetable powder in that the former has less or no fibers. The absence of fibers in a vegetable juice powder may make it suitable to make an even more concentrated vegetable flavour as compared to using a powder. Moreover, the absence of fibers may be advantageous to be used in the process of the invention. For example, when using extrusion the absence of fibers may prevent clogging and may result in a higher production rate of the concentrated vegetable flavour (e.g. in kg/h).

The vegetable is preferable a vegetable as defined for the concentrated vegetable flavour of the invention herewith above. The vegetable is preferably a dry vegetable. Within the context of the invention "dry" is defined as having a water content of less than 15% w/w, more preferably less than 12% w/w, 10% w/w, even more preferably less than 8% w/w based on the total weight of the vegetable. A dry vegetable may result in a vegetable flavour with a more concentrated flavour. The vegetable may be dried, for example a vegetable which is dried in an oven or in the sun. In an embodiment the vegetable of the composition of the process of the invention is itself a vegetable flavour. The vegetable may be a single vegetable, for example garlic or onion. The vegetable may also be a mixture of two, three, four, or more vegetables, for example onion and garlic, or onion and garlic and leek. By using two or more vegetables in the process of the invention the skilled person may tune the flavour.

The amount of vegetable in the composition is preferably between 10 and 100% w/w, more preferably between 20 and 98% w/w, more preferably between 30 and 96%, even more preferably between 40 and 94% w/w, even more preferably between 50 and 92% w/w, most preferably between 60 and 90% w/w.

The oil of the composition may be any edible oil. Within the context of the invention "oil" is defined as an ester of glycerol and at least one fatty acid. The oil may be either solid or liquid at normal room temperature. Oil is understood to include fat and lipid. The term oil is generally used for fatty acid glycerol esters that are liquid at normal room temperature, whereas the term fat is used to refer to fatty acid glycerol esters that are solid at normal room temperature. The oil may be a mono-, di-, and/or triglyceride. Combinations of mono-, di- and/or triglycerides also fall under the scope of the invention. In a preferred embodiment the oil is sesame oil. The oil may advantageously smoothen the process such that the process is more stable.

The incubation temperature in step b) of the process of the invention is between 100°C and 160°C, preferably between 110 and 150°C, more preferably between 120 and 130°C. When the incubation temperature is too low, e.g. below 100°C, the vegetable flavour produced may not be concentrated. When the incubation temperature is too high (e.g. > 160°C), the vegetable flavour produced may have burnt off-notes.

The water content of the composition before or during step b) of the process according to the invention is between 1% and 8% w/w based on the total weight of the composition. The water content of the composition before or during step b) of the process of the invention may be important for obtaining the desired flavour, particularly the desired concentration of the flavour. When the water content of the composition is too high, e.g. more than 8%, the concentration of the vegetable flavour may be too low, or the throughput in the extruder may slow down or stop. When the water content is too low, e.g. less than 1%, burnt-off notes may occur.

The skilled person will understand that the incubation time in step b) of the process of the invention depends on the incubation temperature as well as on the water content of the composition during or before step b) and on the desired concentrated vegetable flavour, and may be anywhere between 1 second and 1 week. At higher incubation temperatures the incubation time may be shorter in order to obtain the desired concentrated vegetable flavour, whereas at lower incubation temperatures the incubation time may be longer in order to obtain the desired concentrated vegetable flavour. Likewise, at lower water contents the incubation time may be shorter, whereas at higher water contents the incubation time may be longer. The skilled person may therefore, without undue burden, establish suitable conditions with respect to temperature, time and water content in order to obtain the desired concentrated vegetable flavour.

The composition used in the process of the invention comprises yeast extract and/or or yeast autolysate. The Food Chemical Codex defines a "yeast extract" as follows: *"Yeast Extract comprises the water soluble components of the yeast cell, the composition of which is primarily amino-acids, peptides, carbohydrates and salts. Yeast extract is produced through the hydrolysis of peptide bonds by the naturally occurring enzymes present in edible yeast or by the addition of food-grade enzymes".* The yeast extract may be produced from any type of food-grade yeast, for example baker's yeast, beer yeast or wine yeast. Preferably, the yeast extract is produced from a yeast strain belonging to the genera *Saccharomyces, Kluyveromyces, Candida* or *Torula* is used. The Food Chemical Codex defines "autolysed yeast" as *"the concentrated, nonextracted, partially soluble digest obtained from food-grade yeast. Solubilization is accomplished by enzyme hydrolysis or autolysis of yeast cells. Food-grade salts and enzymes may be added. Yeast, autolyzed, contains both soluble and insoluble components derived from the whole yeast cell. It is composed primarily of amino acids, peptides, carbohydrates, fats, and salts*". In a preferred embodiment the yeast extract or yeast autolysate is produced from a yeast strain belonging to the genus *Saccharomyces,* i.e. *Saccharomyces cerevisiae.* Adding yeast extract and/or yeast autolysate to the composition before or during step b) of the process of the invention may result in a composition having a fuller, more balanced and/or richer roast vegetable flavour, or which, after adding to a food, may result in a food product having a fuller, more balanced and/or richer roast vegetable flavour.

Preferably the yeast autolysate has a dry solids ratio between 50% and 95%. A process to produce a yeast autolysate with a dry solid ratio between 50% and 95% is described in WO2009/007424

In a preferred embodiment, the yeast extract or yeast autolysate comprises at least 0.75% w/w 5'-GMP on sodium chloride free dry matter. 5'-IMP and 5'-GMP are known for their flavour enhancing properties. Preferably, the yeast extract or yeast autolysate comprises at least 1% w/w 5'-GMP, more preferably at least 1.5% w/w 5'-GMP more preferably at least 2% w/w and most preferably, the yeast extract or yeast autolysate comprises at least 2.5% w/w 5'-GMP on sodium chloride free dry matter. Weight percentage calculations of the 5'-ribonucleotides are based on the disodium salt heptahydrate thereof unless otherwise specified. All percentages are calculated on sodium chloride free dry matter. The weight percentage of 5'-ribonucleotides in the yeast extract or yeast autolysate (%w/w) is based on the weight of the Nacl free dry matter of the composition and is calculated as disodium salt heptahydrate (2Na.7Aq). The phrase "sodium chloride free dry matter" refers to the fact that for the calculation of the weight percentage the weight of any sodium chloride present is excluded from the yeast extract or yeast autolysate of the invention. The measurement of sodium chloride in the composition and the above-mentioned calculation can be performed by methods known to those skilled in the art.

Preferably, the yeast extract or yeast autolysate comprises at least 0,75% w/w 5'-IMP on sodium chloride free dry matter, more preferably at least 1% w/w 5'-IMP, more preferably at least 1.5% w/w 5'-IMP, more preferably at least 2% w/w 5'-IMP and most preferably, the yeast autolysate of the invention comprises at least 2.5% w/w 5'-IMP on sodium chloride free dry matter. It will be understood by the skilled person, that it is highly preferred that the yeast extract or yeast autolysate comprises both 5'-GMP and 5'-IMP in the concentrations given above.

The intimate mixing at step b) of the process of the invention is done in an extruder. The extruder may be any type of extruder suitable for the production of process flavours, such as a twin extruder. Extruders, e.g. twin extruders, are known in the art. The extruder may have any volume, the volume being the maximum volume inside the extruder which may be taken by the composition. Preferably the volume is between 1 gram and 1000 kg. More preferably the volume is between 5 grams and 100 kg, more preferably between 10 grams and 10 kg. The composition of step a) and optionally water and/or oil may be introduced into the extruder through the same or separate feeders. The concentrated vegetable flavour may leave the extruder at a pressure, outside the extruder, varying from reduced pressure (e.g. 5 mbar) to atmospheric pressure (e.g. approximately 1 bar). The concentrated vegetable flavour produced by the process of the invention can be further cooled and/or dried using a cooling belt or any other method known in the art. An extruder may be advantageous in that the process according to the invention may be more reproducible and/or stable. Using an extruder in step b) of the process of the invention may also be advantageous since it allows for a continuous process, which may result in a higher yield of composition having a concentrated vegetable flavour per process. The use of an extruder in step b) of the process of the invention may be advantageous since higher pressures and /or process temperatures may be reached in step b) of the process of the invention. Moreover, use of an extruder may be advantageous since it may allow intimate mixing. Also, the use of an extruder in step b) of the process of the invention may be advantageous since it may result in a homogeneous composition having a concentrated vegetable flavour, i.e. a vegetable flavour in which the concentrated vegetable flavour is homogeneously distributed over the product leaving the extruder. Also, the use of an extruder in step b) of the process of the invention may advantageously result in a vegetable flavour which is more concentrated as compared to a vegetable flavour of for example fresh vegetables, oven-dried vegetables, vacuum oven dried vegetables, belt-dried vegetables, belt dried vegetables dried under vacuum, or roller-drum dried vegetables. The use of an extruder in step b) of the process of the invention may also be advantageous in that the composition having a concentrated vegetable flavour may be free-flowing. The use of an extruder in step b) of the process of the invention may also be advantageous in that it is simple. The use of an extruder in step b) of the process of the invention may also be advantageous it may result in a roast flavour, i.e. that the concentrated vegetable flavour produced by the process of the invention is a roast concentrated vegetable flavour.

In another aspect the invention provides a concentrated vegetable flavour obtainable by the process of the invention.

The concentration of the flavour of the concentrated vegetable flavour obtainable by the process of the invention is preferably such that in order to arrive at a food with equal strength of vegetable flavour, the concentrated vegetable flavour obtainable by the process of the invention is added to said food in an amount to arrive at a final concentration in the food which is ≤50% w/w, more preferably ≤33% w/w, ≤0.25% w/w, even more preferably ≤20% w/w, most preferably ≤12.5% w/w relative to the amount added to the food of a vegetable flavour which is not produced by the process of the invention. The vegetable flavour which is not produced by the process of the invention includes fresh vegetables, oven-dried vegetables, vacuum oven dried vegetables, belt-dried vegetables, belt dried vegetables dried under vacuum, and roller-drum dried vegetables. The absolute amount of the concentrated vegetable flavour obtainable by the process of the invention may vary dependent on the type of application. For example, the amount of concentrated vegetable flavour obtainable by the process of the invention to be added in order to obtain a desired vegetable flavour may be higher for dry snacks than for example in soups and sauces, and may also be dependent on local or personal preferences. Thus, by varying the amount of the concentrated vegetable flavour obtainable by the process of the invention the skilled person can, without undue experimentation, easily establish a suitable amount of concentrated vegetable flavour obtainable by the process of the invention to be added to obtain a food with a desired vegetable flavour.

The concentrated vegetable flavour obtainable by the process of the invention may advantageously be stable, for example during storage. With stable is meant that the concentration of the concentrated vegetable flavour obtainable by the process of the invention is stable over time, i.e. that the amount of the concentrated vegetable flavour obtainable by the process of the invention to be added to a food in order to provide a vegetable flavour does not increase over time. Preferably the concentrated vegetable flavour obtainable by the process of the invention is stable for at least 1 month, more preferably for at least 2 months, 3 months, more preferably at least 6 months, most preferably at least 12 months, where the concentrated vegetable flavour obtainable by the process of the invention is stored between 20 and 25°C in the dark.

In a preferred embodiment the vegetable flavour obtainable by the process of the invention is a granulate or a powder. A granulate or powder advantageously allows the vegetable flavour obtainable by the process of the invention to be mixed homogeneously with food such that the vegetable flavour is evenly distributed in the food.

In another aspect the invention provides a seasoning comprising the concentrated vegetable flavour of the invention or the concentrated vegetable flavour obtainable by the process of the invention. A seasoning is a mixture of food or feed ingredients, usually consisting of herbs and salt, to be added to food or feed to impart or enhance flavour. The seasoning is preferably a food or feed seasoning. The seasoning of the invention may be advantageous in that it may be easier to add the suitable amount of the concentrated vegetable flavour of the invention or the concentrated vegetable flavour produced by the process of the invention to food, since the concentrated vegetable flavour of the invention or the concentrated vegetable flavour obtainable by the process of the invention is very concentrated. Preferably, the amount of the concentrated vegetable flavour of the invention or the concentrated vegetable flavour obtainable by the process of the invention in the seasoning is between 0.5 and 10% w/w, more preferably between 1 and 5% w/w, most preferably between 2 and 4% w/w based on the total weight of the seasoning.

In another aspect the invention provides a container comprising the concentrated vegetable flavour of the invention or the concentrated vegetable flavour obtainable by the process of the invention.

In a further aspect the invention provides a method for preparing a food with a vegetable flavour, the method comprising adding the concentrated vegetable flavour of the invention or the concentrated vegetable flavour obtainable by the process of the invention or the content of the container of the invention or the seasoning of the invention to the food.

### EXAMPLES

### Materials

Gistex® XII, obtainable from DSM Food Specialties, Delft, the Netherlands, is a yeast extract from *Saccharomyces cerevisiae,* containing 40% w/w NaCl based on dry matter.

Plantex® MBE81, obtainable from DSM Food Specialties, Delft, the Netherlands powder is a flavouring based on yeast extract from *Saccharomyces cerevisiae* with a strong boiled meat flavour and taste.

Gistex® LS, obtainable from DSM Food Specialties, Delft, the Netherlands, is a yeast extract from *Saccharomyces cerevisiae.*

Maxarome® Standard Powder, obtainable from DSM Food specialties, Delft, the Netherlands, is a yeast extract from *Saccharomyces cerevisiae,* containing 40% w/w NaCl based on total dry matter and > 3% w/w 5'-GMP based on NaCl free dry matter.

Revel™ BCPN TF, a non-hydrogenated vegetable fat powder of non lauric origin, was obtained from Loders Croklaan, Wormerveer, the Netherlands.

IDF Powdered Cooked Chicken, was obtained from IDF, Springfield, Missouri, USA.

Onion Juice Powder (Aloign5003) was obtained from Diana Naturals, Antrain, France

Maxarome® Plus, obtainable from DSM Food Specialties, Delft, the Netherlands, is a yeast extract from *Saccharomyces cerevisiae* containing 40% w/w NaCl based on total dry matter and > 6% w/w (5'-GMP + 5'-IMP) based on NaCl free dry matter.

Maxavor Rye C, obtainable from DSM Food Specialties, Delft, the Netherlands, is a roast chicken flavour.

NaCl free does not mean that the yeast extract does not or cannot contain NaCl, but instead means that NaCl is excluded from the yeast extract for the calculation of %w/w. The latter calculation can be performed by methods known to those skilled in the art.

**Table 1. Commercials flavours used in the sensory tests**

| | |
|---|---|
| Flavour I | Worlee Crunchy Fried Garlic, Worlee, Hamburg, Germany |
| Flavour II | Roast Garlic Powder, Nikken, Shanghai, China |
| Flavour III | Garlic dry flavor Powder 338108, Symrise, Shanghai, China |
| Flavour IV | Enzyme Hydrolysed Garlic Puree, Qingdao Nongshim Foods Co, Qingdao, China |
| Flavour V | SPF-Diana roasted garlic juice powder |
| Flavour VI | SPF Diana 2000 onion powder, SPF-Diana, Elven, France |
| Flavour VII | SPF Diana 2001 onion powder, SPF-Diana, Elven, France |
| Flavour VIII | SPF Diana 2095 onion powder, SPF-Diana, Elven, France |

### 1. Onion and garlic flavour

To a twin-screw extruder, equipped with a dosing unit and injector for water and a dosing unit and injector for oil, compositions according to Tables 2-4 were added using a separate feeder. The products formed left the extruder in a room under atmospheric pressure and were cooled and dried on a cooling belt equipped with a pressure roll, and subsequently ground and sampled. Yeast extract was obtained from DSM Food Specialties, Delft, the Netherlands as Gistex® LS, a yeast extract *from Saccharomyces cerevisiae.* Dried onion powder containing 5% water w/w was obtained from Unifine, Nijkerk, the Netherlands. Dried garlic powder containing 12% w/w water was obtained by Unifine, Nijkerk, the Netherlands. Yeast autolysate having a dry solids ratio between 50% and 95% is obtainable from DSM Food Specialties, Delft, the Netherlands.

**Table 2. Experimental set up**

| | **Example 1** | **Example 2** | **Example 3** | **Example 4** |
|---|---|---|---|---|
| | **Added ingredients (% of total weight)** | | | |
| **Yeast autolysate** | 10 | 17 | 0 | 0 |
| **Yeast extract** | 0 | 0 | 10 | 17 |
| **Dried onion powder** | 80 | 80 | 80 | 80 |
| **Sesame oil** | 10 | 3 | 10 | 3 |

| | **Process conditions** | | | |
|---|---|---|---|---|
| **Incubation temperature (°C)** | 110 | 110 | 130 | 150 |
| **Throughput (kg/hour)** | 10 | 12 | 12 | 10 |

**Table 3. Experimental set up**

| | **Example 5** | **Example 6** | **Example 7** | **Example 8** |
|---|---|---|---|---|
| | **Added ingredients (% of total weight)** | | | |
| **Yeast autolysate** | 10 | 17 | 0 | 0 |
| **Yeast extract** | 0 | 0 | 10 | 17 |
| **Dried garlic powder** | 80 | 80 | 80 | 80 |
| **Sesame oil** | 10 | 3 | 10 | 3 |

| | **Process conditions** | | | |
|---|---|---|---|---|
| **Incubation temperature** (**°C**) | 110 | 130 | 150 | 170 |
| **Throughput (kg/hour)** | 12 | 10 | 12 | 8 |

**Table 4. Experimental set up**

| | **Example 9** |
|---|---|
| **Added ingredients (% of total weight)** | |
| **Yeast autolysate** | 10 |
| **Dried garlic powder** | 5 |
| **Dried onion powder** | 53 |
| **Onion juice powder** | 28 |
| **Sunflower oil** | 3 |
| **Water** | 0 |

| **Process conditions** | |
|---|---|
| **Incubation temperature (°C)** | 110 |
| **Throughput (kg/hour)** | 10 |

The process flavours of Examples 1-4 all had a roast onion flavour. The roast onion flavours of Example 1 and 2 was fuller and more balanced than the roast onion flavour of Examples 3 and 4.

The process flavours of Examples 5-8 all have a roast garlic flavour. The roast garlic flavour of Examples 5 and 6 was fuller and more balanced than the roast garlic flavour of Examples 7 and 8.

The process flavour of Example 9 had a pleasant, smooth onion flavour, which was even more concentrated than the onion flavours of Examples 1-4. Apparently, adding a small amount (e.g. less than 5%) of garlic powder - in addition to onion powder and/ro onion juice powder - to the composition before or during step (b) has a synergetic effect with respect to the strength of the onion flavour produced, but does not itself provide any garlic flavour.

### 2. Sensory test

The flavour intensity of the garlic flavour of Example 6 was evaluated against the flavour intensity of four well-known, widely available commercial garlic flavours (flavours I, II, III, IV). The commercial flavours were dissolved at a concentration of 0.1% w/w in 100 g. The flavours were evaluated by a trained panel.

### 2.1 Chicken bouillon

Commercial flavours I - IV were dissolved at a concentration of 0.1% w/w in chicken bouillon made from a dry instant mix (see Table 5 for composition of the mix). The bouillon was made by mixing 8 grams of the dry mix in 200 mL boiling water. The concentration of the flavour of Example 6 in the bouillons was selected such that the intensity of the garlic flavour of the bouillon containing the garlic flavour of Example 6 was equal vis-a-vis the intensity of the garlic flavour of the bouillon containing a commercial sample. Results are shown in Table 6.

**Table 5. Composition of the dry instant chicken bouillon mix**

| **Component** | **% w/w based on total dry weight** |
|---|---|
| Gistex® XII powder | 4 |
| Maxavor Rye C | 4 |
| Maxarome® Plus | 2 |
| Maltodextrine | 55.8 |
| NaCl | 19 |
| Sugar (saccharose) | 3.5 |
| IDF Powdered Cooked Chicken | 7 |
| Revel™ BCPN TF | 4 |
| White pepper powder | 0.1 |
| Ginger powder | 0.2 |
| Citric acid | 0.1 |
| Turmeric powder | 0.2 |

**Table 6. Concentration of garlic flavour in bouillon to create equal flavour intensity**

| **Commercial flavour** | **Garlic flavour of Example 6** |
|---|---|
| I: 0.1 % w/w | 0.025 % w/w |
| II: 0.1 % w/w | 0.025 % w/w |
| III: 0.1 % w/w | 0.025 % w/w |
| IV: 0.1 % w/w | 0.033 % w/w |

It can be seen that the flavour intensity of the garlic flavour of Example 6 is 3x - 4x as strong as compared to the commercial garlic flavours.

### 2.2 Chicken bouillon

Commercial flavours I - IV were dissolved at a concentration of 0.1% w/w in chicken bouillon made from a fat free dry instant mix (See Table 7 for composition of the mix). The bouillon was made by mixing 8 grams of the dry mix in 200 mL boiling water. The concentration of the flavour of Example 6 in the bouillons was selected such that the intensity of the garlic flavour of the bouillon containing the garlic flavour of Example 6 was equal vis-a-vis the intensity of the garlic flavour of the bouillon containing a commercial sample. Results are shown in Table 8.

It can be seen that the flavour intensity of the garlic flavour of Example 6 is 3x - 8x as strong as compared to the commercial garlic flavours.

**Table 7. Composition of the fat-free dry instant chicken bouillon mix**

| **Component** | **% w/w based on total dry weight** |
|---|---|
| Gistex® XII powder | 4 |
| Maxavor Rye C | 4 |
| Maxarome® Plus | 2 |
| Maltodextrine | 59.8 |
| NaCl | 19 |
| Sugar (saccharose) | 3.5 |
| IDF Powdered Cooked Chicken | 7 |
| White pepper powder | 0.1 |
| Ginger powder | 0.2 |
| Citric acid | 0.1 |
| Turmeric powder | 0.2 |

**Table 8. Concentration of garlic flavour in bouillon to create equal flavour intensity**

| **Commercial flavour** | **Garlic flavour of Example 6** |
|---|---|
| I: 0.1 % w/w | 0.025 % w/w |
| II: 0.1 % w/w | 0.0125 % w/w |
| III: 0.1 % w/w | 0.0125 % w/w |
| IV: 0.1 % w/w | 0.033 % w/w |

### 2.3 Beef noodle seasoning

Commercial flavours I - IV were dissolved at a concentration of 0.1% w/w in a solution made from a beef noodle seasoning (for composition of the seasoning see Table 9). The concentration of the flavour of Example 6 in the bouillons was selected such that the intensity of the garlic flavour of the solution containing the garlic flavour of Example 6 was equal vis-a-vis the intensity of the garlic flavour of the solution containing a commercial sample. Results see Table 10.

**Table 9. Composition of the beef noodle seasoning**

| **Component** | **% w/w based on total dry weight** |
|---|---|
| Gistex® XII | 2 |
| Plantex® MBE81 powder (beef taste) | 7 |
| Maxarome® Standard Powder | 1 |
| Maltodextrine | 61 |
| NaCl | 13 |
| Sugar (saccharose) | 3 |
| Monosodium glutamate | 4 |
| Soy sauce powder | 4 |
| Beef tallow powder | 1 |
| Revel™ BCPN TF | 2 |
| Black pepper powder | 0.1 |
| Caramel powder | 0.5 |
| Onion powder | 1 |
| Garlic powder | 0.2 |
| Turmeric powder | 0.1 |
| Star aniseed | 0.02 |
| Citric acid | 0.08 |

**Table 10. Concentration of garlic flavour in noodle to create equal flavour intensity**

| **Commercial flavour** | **Garlic flavour of Example 6** |
|---|---|
| I: 0.1 % w/w | 0.020 % w/w |
| II: 0.1 % w/w | 0.0125 % w/w |
| III: 0.1 % w/w | 0.025 % w/w |
| IV: 0.1 % w/w | 0.033 % w/w |

It can be seen that the flavour intensity of the garlic flavour of Example 6 is 3x - 8x as strong as compared to the commercial garlic flavours.

### 3. Sensory test garlic flavour

The sensory profile of the garlic flavour of Example 6 (0.125% w/w in water) was evaluated against three well-known, widely available commercial garlic flavours (flavours I, II, V). The commercial flavours were dissolved at a concentration of 0.5% w/w in water.

The flavours were evaluated and scored by a trained panel. The following sensory attributes were evaluated: aroma, taste, mouthfeel, and appearance. The magnitude of the score is a measure for the perceived intensity of the sensory attribute.

Results are shown in Table 11-14.

**Table 11. Aroma**

| **Aroma** | **I** | **II** | **V** | **Example 6** |
|---|---|---|---|---|
| Garlic | 5.2 | 3.5 | 2.8 | 5.3 |
| Roast | 2.3 | 1.8 | 3.5 | 5.2 |
| Burn | 2.0 | 1.3 | 1.8 | 3.5 |
| Sweet | 3.5 | 2.7 | 6.2 | 4.0 |
| Cooked | 4.2 | 3.8 | 3.7 | 4.5 |
| Green | 3.8 | 3.2 | 3.0 | 1.8 |
| Pungent | 2.8 | 2.7 | 2.8 | 3.2 |

**Table 12. Taste**

| **Taste** | **I** | **II** | **V** | **Example 6** |
|---|---|---|---|---|
| Umami | 2.3 | 2.0 | 3.0 | 4.3 |
| Garlic | 5.2 | 3.3 | 3.8 | 5.8 |
| Oily | 1.3 | 1.5 | 2.7 | 3.7 |
| Bitter | 2.0 | 1.8 | 3.5 | 2.8 |
| Roast | 3.2 | 2.2 | 4.0 | 5.8 |
| Sweet | 3.2 | 3.7 | 4.3 | 4.0 |

**Table 13. Mouthfeel**

| **Mouthfeel** | I | **II** | **V** | **Example 6** |
|---|---|---|---|---|
| Fullness | 3.5 | 2.8 | 4.0 | 5.0 |
| Smooth | 4.2 | 3.2 | 3.5 | 4.3 |
| Pungent | 2.5 | 2.3 | 2.2 | 4.2 |
| Astringent | 2.7 | 2.2 | 2.0 | 2.5 |
| Lingering | 3.2 | 2.0 | 4.5 | 4.8 |

**Table 14. Appearance**

| **Appearance** | **I** | **II** | **V** | **Example 6** |
|---|---|---|---|---|
| Yellow to brown | 1.5 | 1.5 | 5 | 2.7 |
| Turbidity | 4.7 | 3.8 | 4.8 | 3.0 |
| Sediment | 4.8 | 4.5 | 2.3 | 5.2 |

### 4. Sensory test onion flavour

To a twin-screw extruder, equipped with a dosing unit and injector for water and a dosing unit and injector for oil, compositions according to Table 15 were added using a separate feeder. The products formed left the extruder in a room under atmospheric pressure and were cooled and dried on a cooling belt equipped with a pressure roll, and subsequently ground and sampled. Dried onion powder containing 5% water w/w was obtained from Unifine, Nijkerk, the Netherlands. Yeast autolysate having a dry solids ratio between 50% and 95% is obtainable from DSM Food Specialties, Delft, the Netherlands.

**Table 15. Experimental set up**

| | **Example 10** |
|---|---|
| | **Added ingredients (% of total weight)** |
| **Yeast autolysate** | 10 |
| **Dried onion powder** | 80 |
| **Sesame oil** | 11 |

| | **Process conditions** |
|---|---|
| **Incubation temperature (°C)** | 110 |
| **Throughput (kg/hour)** | 8.1 |

The onion flavour of Example 10 (0.125% w/w in water containing 0.3% w/w NaCl) was evaluated against three well-known, widely available commercial flavours (flavours VI, VII, VIII). The commercial flavours were dissolved at a concentration of 0.5% w/w in water containing 0.3% w/w NaCl.

The flavours were evaluated and scored by a trained panel. The following sensory attributes were evaluated: aroma, taste, mouthfeel, and appearance. The magnitude of the score is a measure for the perceived intensity of the sensory attribute.

Results are shown in Tables 16-19.

**Table 16. Aroma**

| **Aroma** | **VI** | **VII** | **VIII** | **Example 10** |
|---|---|---|---|---|
| Onion | 4.8 | 5.2 | 3.3 | 5.0 |
| Roast | 1.0 | 1.0 | 1.7 | 8.0 |
| Burn | 0.2 | 0.2 | 0.3 | 5.7 |
| Sweet | 5.0 | 5.8 | 3.7 | 3.5 |
| Cooked | 4.3 | 5.2 | 4.5 | 3.8 |
| Green | 5.7 | 6.2 | 3.5 | 2.8 |
| Pungent | 2.2 | 3.7 | 2.8 | 5.0 |

**Table 17. Taste**

| **Taste** | **VI** | **VII** | **VIII** | **Example 10** |
|---|---|---|---|---|
| Umami | 2.8 | 3.0 | 2.5 | 4.5 |
| Onion | 3.2 | 5.0 | 4.3 | 5.3 |
| Oily | 1.2 | 1.2 | 1.5 | 4.0 |
| Bitter | 1.8 | 1.8 | 1.8 | 5.2 |
| Roast | 1.2 | 1.2 | 2.8 | 7.3 |
| Sweet | 4.3 | 4.0 | 3.7 | 2.7 |

**Table 18. Mouthfeel**

| **Mouthfeel** | **VI** | **VII** | **VIII** | **Example 10** |
|---|---|---|---|---|
| Fullness | 3.3 | 4.2 | 3.7 | 8 |
| Smooth | 4 | 4.8 | 4.3 | 4.8 |
| Pungent | 2.2 | 2.5 | 2.5 | 5.5 |
| Astringent | 3 | 3.2 | 3 | 3.5 |
| Lingering | 2.5 | 3.5 | 3.3 | 6.3 |

**Table 19. Appearance**

| **Appearance** | **VI** | **VII** | **VIII** | **Example 10** |
|---|---|---|---|---|
| Yellow to brown | 2 | 2 | 2 | 6.3 |
| Turbidity | 5.5 | 6.3 | 5.8 | 3.8 |
| Sediment | 5.5 | 6 | 5.8 | 5.5 |

## Claims

1. Process to produce a concentrated vegetable flavour comprising,
a) preparing a composition comprising a vegetable, an oil and a yeast extract and/or yeast autolysate,
b) intimately mixing the composition in an extruder at a temperature between 100°C and 160°C and a reaction time between 1 second and 1 week, sufficient for the concentrated vegetable flavour to develop, wherein the water content of the composition before or during step b) is between 1% and 8% w/w based on the total weight of the composition.

2. Process according to claim 1 wherein the concentrated vegetable flavour is garlic flavour or onion flavour.

3. Process according to claim 1 wherein the vegetable is a single vegetable or a mixture of two, three, four or more vegetables.

4. Process according to claim 3 wherein the vegetable is garlic and/or onion.

5. Process according to claim 4 wherein the vegetable is in the form of a powder.

6. Process according to any one of claim 1-5 wherein the yeast extract or yeast autolysate comprises at least 0.75% w/w 5'-GMP on sodium chloride free dry matter.

7. Process according to any one of claim 1-6 wherein the yeast autolysate has a dry solids ratio between 50% and 95%.

8. Concentrated vegetable flavour obtainable by the process according to any one of claim 1-7.

9. Concentrated vegetable flavour according to claim 8 wherein the concentrated vegetable flavour is a garlic flavour or an onion flavour.

10. Concentrated vegetable flavour according to claim 8 or 9 wherein the vegetable flavour is a roast vegetable flavour.

11. Concentrated vegetable flavour according to any of the claims 8 to 10 which is a granulate or a powder.

12. Method for preparing a food with a vegetable flavour, the method comprising adding the vegetable flavour of claim 8-11 to said food in an amount to arrive at a final concentration of less than 0.1 % w/w of the food.

## Patentansprüche

1. Verfahren zum Herstellen eines konzentrierten pflanzlichen Aromastoffs, umfassend
a) Herstellen einer Zusammensetzung, die eine Pflanze, ein Öl und einen Hefeextrakt und/oder ein Hefeautolysat umfasst,
b) inniges Mischen der Zusammensetzung in einem Extruder bei einer Temperatur zwischen 100 °C und 160 °C und einer Reaktionszeit zwischen 1 Sekunde und 1 Woche, ausreichend für die Entwicklung des konzentrierten pflanzlichen Aromastoffs, wobei der Wassergehalt der Zusammensetzung vor oder während Schritt b) zwischen 1 % und 8 % w/w bezogen auf das Gesamtgewicht der Zusammensetzung beträgt.

2. Verfahren gemäß Anspruch 1, wobei der konzentrierte pflanzliche Aromastoff Knoblauch-Aromastoff oder Zwiebel-Aromastoff ist.

3. Verfahren gemäß Anspruch 1, wobei die Pflanze eine einzelne Pflanze oder ein Gemisch von zwei, drei, vier oder mehr Pflanzen ist.

4. Verfahren gemäß Anspruch 3, wobei die Pflanze Knoblauch und/oder Zwiebel ist.

5. Verfahren gemäß Anspruch 4, wobei die Pflanze in der Form eines Pulvers vorliegt.

6. Verfahren gemäß einem der Ansprüche 1-5, wobei der Hefeextrakt oder das Hefeautolysat wenigstens 0,75 % w/w 5'-GMP bezogen auf Natriumchlorid-freie Trockensubstanz umfasst.

7. Verfahren gemäß einem der Ansprüche 1-6, wobei das Hefeautolysat einen Trockensubsanzanteil zwischen 50 % und 95 % aufweist.

8. Konzentrierter pflanzlicher Aromastoff, erhältlich durch das Verfahren gemäß einem der Ansprüche 1-7.

9. Konzentrierter pflanzlicher Aromastoff gemäß Anspruch 8, wobei der konzentrierte pflanzliche Aromastoff ein Knoblauch-Aromastoff oder ein Zwiebel-Aromastoff ist.

10. Konzentrierter pflanzlicher Aromastoff gemäß Anspruch 8 oder 9, wobei der pflanzliche Aromastoff ein gerösteter pflanzlicher Aromastoff ist.

11. Konzentrierter pflanzlicher Aromastoff gemäß einem der Ansprüche 8 bis 10, der ein Granulat oder ein Pulver ist.

12. Verfahren zum Herstellen eines Lebensmittels mit einem pflanzlichen Aromastoff, wobei das Verfahren Zugeben des pflanzlichen Aromastoffs gemäß Anspruch 8-11 zu dem Lebensmittel in einer Menge zum Erhalten einer Endkonzentration von weniger als 0,1 % w/w des Lebensmittels umfasst.

## Revendications

1. Procédé destiné à préparer un arome de légume concentré, comprenant
a) la préparation d'une composition comprenant un légume, une huile et un extrait de levure et/ou un autolysat de levure,
b) le mélange intime de la composition dans une extrudeuse à une température comprise entre 100°C et 160°C et une durée de réaction comprise entre 1 seconde et 1 semaine, suffisante pour le développement de l'arôme de légume concentré, où la teneur en eau de la composition avant ou pendant l'étape b) est comprise entre 1% et 8% p/p sur la base du poids total de la composition.

2. Procédé selon la revendication 1, dans lequel l'arôme de légume concentré est un arôme d'ail ou un arôme d'oignon.

3. Procédé selon la revendication 1, dans lequel le légume est un légume unique ou un mélange de deux, trois, quatre, ou plus, légumes.

4. Procédé selon la revendication 3, dans lequel le légume est l'ail et/ou l'oignon.

5. Procédé selon la revendication 4, dans lequel le légume se trouve sous la forme d'une poudre.

6. Procédé selon l'une quelconque des revendications 1-5, dans lequel l'extrait de levure ou l'autolysat de levure comprend au moins 0,75% p/p de 5'-GMP sur la base de la matière sèche dépourvue de chlorure de sodium.

7. Procédé selon l'une quelconque des revendications 1-6, dans lequel l'autolysat de levure possède un rapport de matières sèches compris entre 50% et 95%.

8. Arôme de légume concentré pouvant être obtenu par le procédé selon l'une quelconque des revendications 1-7.

9. Arôme de légume concentré selon la revendication 8, dans lequel l'arôme de légume concentré est un arôme d'ail ou un arôme d'oignon.

10. Arôme de légume concentré selon la revendication 8 ou 9, dans lequel l'arôme de légume est un arôme de légume grillé.

11. Arôme de légume concentré selon l'une quelconque des revendications 8 à 10, qui est un granulé ou une poudre.

12. Méthode de préparation d'un aliment ayant un arôme de légume, la méthode comprenant l'addition de l'arôme de légume selon les revendications 8-11 audit aliment selon une quantité pour obtenir une concentration finale inférieure à 0,1% p/p de l'aliment.
